# EUROPEAN PATENT SPECIFICATION

(11) **EP 2 584 908 B1**
(45) Date of publication and mention of the grant of the patent: **03.08.2016**
(21) Application number: 11726847.4
(22) Date of filing: 23.06.2011
(51) Int. Cl.: A23D 9/00, C11C 3/10

(54) **NON-TEMPER, TEXTURE PROVIDING FAT COMPOSITIONS**
NICHT GEHÄRTETE, TEXTURLIEFERNDE FETTZUSAMMENSETZUNGEN
COMPOSITIONS DE GRAISSES TEXTURANTES, NON TREMPÉES

(30) Priority: 24.06.2010 US 358133 P; 24.06.2010 DK 201070289
(43) Date of publication of application: 01.05.2013
(73) Proprietor: AAK Denmark A/S, 8000 Aarhus C (DK)
(72) Inventor: ANDERSEN, Morten Daugaard, DK-8000 Aarhus C (DK); JUUL, Bjarne, DK-8310 Tranbjerg J (DK)
(74) Representative: Zacco Denmark A/S
(86) International application number: PCT/EP2011/060551
(87) International publication number: WO 2011/161213

(56) References cited:
- EP-B1- 0 687 142
- WO-A1-2007/090477
- JP-A- 2010 081 835
- US-A- 5 762 990
- US-A1- 2004 126 475

## Description

### Technical field of the invention

The present invention relates to non-temper texture providing fat compositions with a low content of saturated fatty acids and a relatively high content of asymmetrical SSU type triglycerides. The fat compositions provides texture at a similar or higher rate compared to state of the art fats at the same or lower content of saturated fatty acids in confectionary applications.

### Background of the invention

In confectionary products cocoa butter (CB) and cocoa butter equivalents (CBE) are well known ingredients. The production of CBEs is based on fractions of fats containing the same triglycerides as CB, e.g. palm oil, shea butter, illipe, etc. The main part of the triglycerides is of the symmetric SUS type (S=saturated fatty acids, U=unsaturated fatty acids) or more specifically, StOSt, POSt and POP (P=palmitic acid (C16:0), St=stearic acid (C18:0), O=oleic acid (C18:1)).

CB and CBE exist in a number of polymorphic forms, and the nature of the crystalline form depends on the method of cooling of the liquid fat. If the fat is allowed to crystallize in an unstable form, it recrystallises after a time delay. In the production of chocolate this transformation will cause a change from a nice glossy chocolate to a dull or mould looking chocolate. This phenomenon, "fat-bloom", is avoided by the tempering of the chocolate. In the tempering process the liquid chocolate is cooled down to produce both stable and unstable crystals followed by heating to a temperature above the melting point of the unstable crystals, leaving only stable seed crystals.

Tempering is a complicated and expensive process, and consequently there is a need for non-temper fat compositions that do not require tempering i.e. that solidifies in a stable form.

EP 1 736 059 discloses an edible granular structuring composition suitable for the production of structured food products having a low content of saturated and trans fatty acids comprising a glyceride composition and a non-glyceride composition.

The ratio of asymmetrical and symmetrical triglycerides in the hard or semi hard fat of the glyceride composition is not mentioned, but from the description it is revealed that optimum structuring properties is obtained with at least a content of 55% of the symmetric SUS-triglycerides.

WO 2008/138970 discloses a structured food product with a hard texture, containing between 20 and 100% of a fat phase and between 0 and 15% of water.

From the description it appears that the hard fat component is preferred to contain at least 60% symmetric, viz. SUS-triglycerides, which correlates with that the food product is described as being a tempered type.

WO 2006/037341 discloses a low-lauric, low-trans fat composition comprising a triglyceride mixture the constituent fatty acids of which are composed of 40-70 % by weight of palmitic, stearic and arachidic acid residues, 25-60 % by weight of oleic, linoleic, linolenic and C18-trans-unsaturated fatty acid residues.

WO 2007/090477 discloses a structured, fat continuous edible product comprising less than 30 % saturated fatty acids, between 20 and 100 % of a triglyceride composition containing less than 45 % saturated fatty acids and less than 10% trans unsaturated fatty acids. The main parts of triglycerides are of the symmetric SUS type, the asymmetric SU₂ type and the unsaturated U₃ type.

It is well known that the texture providing properties of a fat composition are related to a variety of properties of the fat i.e. the nature of the fatty acids and their individual amount, and the type of the triglycerides.

In general, short chain triglycerides are liquid at room temperature, and the longer the chain length, the higher is the melting point. Furthermore, the U₃-types of triglycerides are liquid, whereas trans-hydrogenated and S₃-types are solid at room temperature.

For mixtures also comprising SU₂ and S₂U-types the texture providing properties are in general related to the degree of saturated content and thus the melting characteristics i.e. the solid fat content at relevant temperatures. From a functional point the use of fat compositions with a relative high amount of saturated content is preferable, but due to the health recommendations to limit the intake of saturated fat, there is a need for fat compositions with a low content of saturated fatty acids.

From the abovementioned it appears that there is a particular need for non-temper, texture providing fat compositions having a low content of saturated fatty acids and at the same time having functional characteristics providing good texture in the final composition.

Accordingly, the main object of the invention is to provide such new non-temper fat compositions providing similar or better texture in the final composition than prior art, non-temper fat compositions at the same or at a lower content of saturated fatty acids.

Another object is to provide fat compositions, which show similar or better texture in the final confectionery or bakery product at the same or a lower content of saturated fatty acids than that of commercial available, prior art fats.

Yet a further object is to provide products, which have a higher texture index, defined as texture per percent of SAFA, than the commercial available, prior art fats.

### Summary of the invention

The present invention relates to a non-temper, texture providing fat composition comprising
- 10-65% by weight of one or more vegetable oils having a slip melting point of no more than 25°C and
- 35-90 % by weight of one or more vegetable fats having a slip melting point of more than 25°C;
wherein in said one or more vegetable fats at least 90% by weight of the constituent fatty acid chains are longer than C12, the ratio C16:0 / C18:0-C24:0 is no more than 4, and the ratio SSU / SUS is at least 1, and wherein in said fat composition the content of S₃ - type of triglycerides is at least 0.5% by weight, wherein the groups S designates identical or different saturated fatty acids, and the groups U designates identical or different unsaturated fatty acids.

It is surprising that by the present invention it is possible to develop non-temper fat compositions that are able to provide texture indexes, defined as texture per percent of total saturated content (SAFA), that are higher than state of the art, non-temper fat compositions.

It is also surprising that the lower the ratio is of C16:0/C18:0-C24:0 in the fat component, the higher is the resulting texture in confectionery products, e.g. fillings, as well as texture index.

Furthermore it is surprising that there is no correlation between the texture indexes and the solid fat content (SFC) of the fat composition used because it is common prior acknowledgement that texture is dependent on SFC, while the sensory perception depends on texture.

It is well known in the art that it is possible to reduce the total saturated content in compositions where symmetrical SUS - type triglycerides are mixed with liquid oils; but they are suffering from the drawback that tempering or seeding is necessary to obtain a suitable texture for the application in confectionery products.

In the compositions of the present invention the fat component has the same or a higher content of asymmetric SSU-type triglycerides compared to the content of SUS-types; viz. the ratio of SSU/SUS is at least 1. At the same time the content of saturated C16:0 fatty acid is relatively low compared to the total content of saturated C18:0-C24:0 fatty acids in the fat component, and the fat composition also has a certain content of tri-saturated triglycerides (S₃- types). Normally tri-saturated triglycerides are unwanted, as they tend to give a waxy mouth feel in confectionery products, but in the products of the invention relatively high contents of e.g. 5% or more is well tolerated.

The present invention further relates to a method for the production of a fat composition according to any one of claims 1-5 comprising the following steps:
1) providing one or more vegetable oils having a slip melting point of no more than 25°C
2) providing one or more vegetable fats having a slip melting point of more than 25°C wherein at least 90% by weight of the constituent fatty acid chains are longer than C12, the ratio C16:0 / C18:0-C24:0 is no more than 4, and the ratio SSU / SUS is at least 1, and the content of S₃-types of triglycerides is so high that it constitutes at least 0.5% by weight of the final fat composition,
3) mixing 10-65% by weight of component (1) with 35-90% by weight of component (2) at a temperature above the slip melting point of component (2);
4) cooling the mixture to ambient temperature.

### Definitions

In the context of the present invention, the following terms are meant to comprise the following, unless defined elsewhere in the description.

### About:

The terms "about", "around", or "approximately" are meant to indicate e.g. the measuring uncertainty commonly experienced in the art, which can be in the order of magnitude of e.g. +/- 1, 2, 5, 10%, etc.

### Comprising:

The term "comprising" or "to comprise" is to be interpreted as specifying the presence of the stated parts, steps, features, or components, but does not exclude the presence of one or more additional parts, steps, features, or components. E.g., a composition comprising a chemical compound may thus comprise additional chemical compounds, etc.

### Oils and Fats:

These terms are used for esters between fatty acids and glycerol. One molecule of glycerol can be esterified to one, two and tree fatty acid molecules resulting in a monoglyceride, a diglyceride or a triglyceride (TAG) respectively. Usually fats consist of mainly triglycerides and minor amounts of lecithin, sterols, etc. If the fat is liquid at room temperature it is normally called oil. If the fat is semisolid at room temperature and of exotic origin it is referred to as butter, e.g. shea butter. If it is solid at room temperature it is called a fat.

It follows from these definitions, that according to the present invention, the component with a slip melting point of no more than 25°C is called an oil, while the component with a slip melting point of more than 25°C is called a fat.

With respect to oils, fats and related products in this context, reference is made to "Physical and Chemical Characteristics of Oils, Fats and Waxes", AOCS, 1996, as well as "Lipid Glossary 2", F.D. Gunstone, The Oily Press, 2004.

### Slip melting point

This term defines the temperature at which a column of fat in an open capillary tube moves up the tube when it is subjected to controlled heating in a water bath.

Mixtures of triglycerides do not have a fixed melting point, and in the description of the present invention the slip melting point according to AOCS Cc 3-25 is used.

### SAFA and TFA:

For saturated fatty acid the abbreviation SAFA is used, and for trans-unsaturated fatty acids the abbreviation TFA is used.

### S and U-types of fatty acid:

S means a saturated fatty acid, and U means an unsaturated fatty acids. The fatty acids, which are comprised in the triglycerides of formulae SSU, SUS, etc. and referred to in the SSU/SUS ratio, may be identical or different, saturated and unsaturated fatty acids.

### Texture:

Texture refers to the properties held in consistency and sensations caused by the external surface of an object. Characterization of texture commonly falls in two main groups, based on sensory and instrumental methods of analysis.

Sensory analysis includes use of the fingers, as well as the lips, tongue and teeth in the mouth. The widely used instrumental method is a cone or needle penetration test. Automatic analyzer equipment used is normally referred to as a texture analyzer.

The analyser used in the present invention was a Texture Analyzer TA-XT2i, and the probe used was the P2N needle set to penetrate 5 mm. The measured penetration force was expressed in grams.

### Texture index

The texture index is defined as texture per percent of SAFA

### Food products:

Comprise products to feed animals and products for human consumption. An important group of products are those where cocoa butter and cocoa butter-like fats are used. Common applications of such products comprise e.g. confectionery compositions; bakery and dairy products e.g. ice cream coatings.

For products and methods in the confectionery areas, reference is made to "Chocolate, Cocoa and Confectionery", B. W. Minifie, Aspen Publishers Inc., 3. Edition 1999.

### Brief description of the drawings

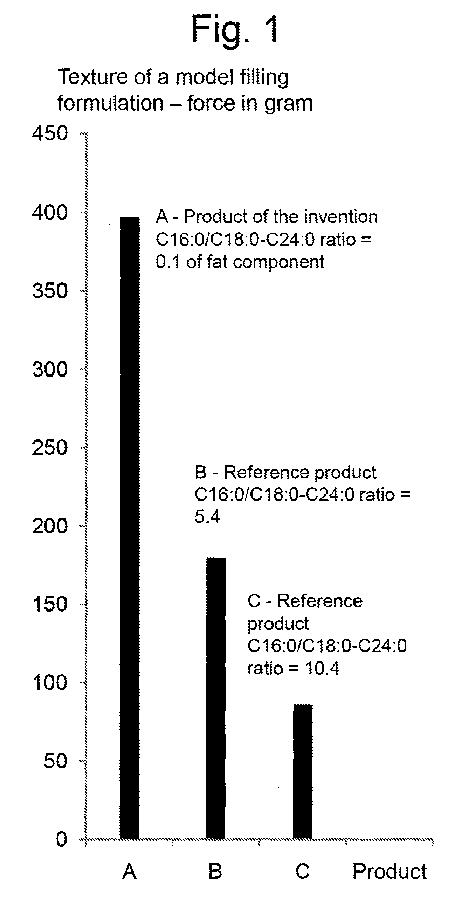

The invention is further illustrated by the drawings, wherein
**Fig. 1****:** Illustrates the texture providing properties in a model filling of a fat composition of the invention (Invention A, according to Example 1) in comparison with two reference fats, Ref. I and Ref. II, with increasing ratio of C16:0/C18:0-C24:0.

The ratio of C16:0/C18:0-C24:0 in the fat component of the compositions being:
1. A: 0.1
2. B (Ref. I): 5.4
3. C (Ref. II): 10.4

### Detailed description of the invention

The ratio C16:0 / C18:0-C24:0 of the one or more vegetable fats in the fat composition of the invention is in one embodiment no more than 2.

The slip melting point of the one or more vegetable oils is in another embodiment no more than 20°C, and/or the slip melting point of the one or more fats is higher than 30°C.

The content of S₃ - type of triglycerides in the fat composition is in one embodiment no more than 12% by weight, and in another embodiment the total content of saturated fatty acids is no more than 65% by weight.

In order to keep the SAFA and TFA content low the fat component of the composition is based on non-hydrogenated vegetable fats and oils for example of the C16/C18-types, e.g. palm oil, shea butter, etc. This result in a composition of the fat component where the saturated fatty acids S are mainly C16:0 and C18:0 i.e. 50%, 75% or more, or 85% or more, or 90% or more of the saturated fatty acids. The unsaturated fatty acids U are mainly C18:1 and C18:2 i.e. 50%, 75% or more, or 85% or more, or 90% or more of the unsaturated fatty acids in said fat component.

In another embodiment of the invention, the oil component of the fat composition is selected according to the ratio of C18:3 / total C18-unsaturated. For a relatively high content of C16:0 in the fat component oils with a ratio of C18:3 / total C18-unsaturated that is less than 0.06 are selected as they provides more texture than those with a higher ratio. Typical examples of suitable oils are sunflower, high oleic sunflower and soybean oils.

In yet another embodiment that content of linoleic acid in the one or more vegetable fats is no more than 25 %.

In another embodiment the one or more vegetable oils or one or more vegetable fats have not been hydrogenated and/or are refined and deodorized.

There are many feasible ways of obtaining the fat component and the oil component to be included in the fat compositions of the invention, and for a person skilled in the art and from the examples this is sufficiently disclosed. Concerning the liquid oil component they are commodity products in the trade or elains from the fractionation of fats.

In one embodiment the oils and fats or the mixture of those used are refined and deodorized.

In one embodiment of the method of the invention the total content of S₃-type of triglycerides in the resulting fat composition is no more than 12% by weight, and/or total content of saturated fatty acids is no more than 65% by weight.

In another embodiment the method further comprises packing said mixture in a suitable container.

Furthermore, in another embodiment the one or more fat is randomized by interesterification in the presence of a catalyst e.g. sodiummethylate, and in a further embodiment the one or more oils or fats or the mixture of oils and fats is fractionated by solvent or dry fractionation.

In the method it may sometimes be an advantage that the oils and fats have not been hydrogenated and/or are refined and deodorized.

The present invention also relates to the use of a fat composition according to the invention or produced according to the invention for the manufacture of a processed food product for human and/or animal consumption, and as a component of oils and fats, which are to be incorporated in food products for humans and other mammals.

The invention also relates to the use of a fat composition according to the invention as an ingredient in confectionery, bakery and dairy fillings in concentrations of 5-60% by weight, e.g. 10-50% by weight, and as an ingredient in coating compounds for confectionery, bakery and dairy products in concentrations of 1-55% by weight, e.g. 10-40% by weight of the coating compound.

Finally, the present invention relates to a product composed of 5-95% by weight of a fat composition of the invention or produced according to the invention and 95-5% by weight of other vegetable oils, fats and/or oil soluble food ingredients e.g. phytosterols, vitamins, colorants, flavors, emulsifiers, etc.

### Examples

All analytical values specified as ratio and in percent are by weight.

### Example 1:

### Products of the invention

Table 1 illustrates the composition of some of the products of the invention.

### Brief description of the components:

1: Middle fraction from an interesterified blend of shea stearin, shea butter and sunflower oil
2: High oleic sunflower oil
3: Fully hydrogenated rapeseed oil
4: Shea stearin
5: A middle fraction from an interesetrified blend of shea butter and sunflower oil

The components were mixed together at a temperature in the range of 50-75 °C and cooled to ambient temperature.

**Table 1**

| **Product/Parameter** | **A** | **A +S₃** | **D** | **E** | **F** |
|---|---|---|---|---|---|
| Components in %: | | | | | |
| 1 | 61.0 | 59.8 | 0 | 0 | 0 |
| 2 | 39.0 | 38.2 | 46.0 | 46.0 | 46.0 |
| 3 | 0 | 2.0 | 0 | 0 | 0 |
| 4 | 0 | | 0 | 5.4 | 13.5 |
| 5 | 0 | | 54.0 | 48.6 | 40.5 |
| Ratio SSU/SUS ¹⁾ | 2 | 2 | 2 | 1.55 | 1.10 |
| Ratio C16:0/C18:0-C24:0 ¹⁾ | 0.1 | 0.1 | 0.2 | 0.2 | 0.2 |
| Content of S₃ in % ²⁾ | 2.7 | 4.6 | 2.3 | 2.1 | 1.9 |
| Content of SAFA in % ²⁾ | 40.2 | 41.4 | 39.6 | 39.5 | 39.4 |

| | | | | | |
|---|---|---|---|---|---|
| 1) Based on the fat component of the fat composition without S₃ - types of TAGs 2) Based on the total fat composition | | | | | |

### Example 2:

### Texture providing properties related to various product parameters tested in a model filling formulation

The model filling formulation used was the following:
40% by weight of a fat composition to be tested
40% by weight of icing sugar
20% by weight of skim milk powder

All the ingredients were mixed and added 0.4% by weight of lecithin in a Hobart N-50 mixer at 50 °C for ten minutes and refined in a Bühler SDY-300 three-roll refiner to a particle size of approximately 20µ, and conched in the Hobart machine for 6 hours. After conching the mass was transferred to plastic cups containing 50 g. The samples were then cooled for 30 minutes in a cooling tunnel at 12 °C.

The texture of the model fillings was measured after a time delay of one week at measuring temperature. The measurement was performed in a Texture analyzer XT2i with a probe P2N set to penetrate 5 mm. The tabulated values are mean values of five measurements of the penetration force measured in grams.

### 2.1 Correlation between texture, the ratio C16:0/C18:0-C24:0 and solid fat content (SFC).

Product A is a fat composition of the invention prepared according to example 1. Product B and C are reference fat compositions prepared like the products of the invention but with higher ratios of C16:0/C18:0-C24:0 in the fat component.

**Table 2.1**

| **Product / Parameter** | **A** | **B Ref. I** | **C Ref. II** |
|---|---|---|---|
| Ratio C16:0/C18:0-C24:0 ¹⁾ | 0.1 | 5.4 | 10.4 |
| Ratio SSU/SUS ¹⁾ | 2.0 | 2.0 | 2.0 |
| Content of S₃ - type of TAGs in % ²⁾ | 2.7 | 6.4 | 3.1 |
| Total content of SAFA in % ²⁾ | 40.2 | 39.9 | 40.3 |
| SFC at 20 °C in % ³⁾ | 24 | 29 | 25 |
| Texture after one week at 20 °C in gram ⁴⁾ | 397 | 180 | 86 |
| Texture index after one week at 20 °C pr. % SAFA | 9.9 | 4.5 | 2.1 |

| | | | |
|---|---|---|---|
| 1) Based on the fat component of the fat composition without S₃ - types of TAGs 2) Based on the total fat composition 3) Measured on the total fat composition according to IUPAC 2.150a at 20 °C 4) Texture measured in the model filling containing the fat composition in test | | | |

From the figures in table 2.1 it can surprisingly be seen that increasing the ratio C16:0/C18:0-C24:0 leads to lower resulting texture of the model filling as well as lower texture index pr. percent of total saturated content (SAFA). Furthermore it is surprising that there is no correlation between the texture of the model filling and the SFC value of the fat composition used.

### 2.2 Correlation between texture and the ratio SSU/SUS

Products of the invention D, E and F were prepared according to example 1. The results of tests in the model filling are illustrated in the following table.

**Table 2.2**

| **Product / Parameter** | **D** | **E** | **F** |
|---|---|---|---|
| Ratio SSU/SUS ¹⁾ | 2.00 | 1.55 | 1.10 |
| Ratio C16:0/C18:0-C24:0 ¹⁾ | 0.2 | 0.2 | 0.2 |
| Content of S₃ - type of TAGs in % ²⁾ | 2.3 | 2.1 | 1.9 |
| Total content of SAFA in % ²⁾ | 39.6 | 39.5 | 39.4 |
| Texture after one week at 20 °C in gram ³⁾ | 353 | 292 | 225 |
| Texture index after one week at 20 °C pr. % SAFA | 8.9 | 7.4 | 5.7 |
| Texture after one week at 23 °C in gram ³⁾ | 278 | 212 | 189 |
| Texture index after one week at 23 °C pr. % SAFA | 7.0 | 5.4 | 4.8 |

| | | | |
|---|---|---|---|
| 1) Based on the fat component of the fat composition without S₃ - types of TAGs 2) Based on the total fat composition 3) Texture measured in the model filling containing the fat composition in test | | | |

From the results it can be seen that the ratio SSU/SUS has a big influence on the texture providing properties of the fat composition both at 20 and 23 °C. A higher ratio leads to better texture properties.

### 2.3 Correlation between texture and S₃ content

To the products described in 2.1 were added S₃ type of TAGs, and the test was repeated. The results can be found in the following table:

**Table 2.3**

| **Product / Parameter** | **A** | **A +S₃** | **B** | **B +S₃** | **C** | **C +S₃** |
|---|---|---|---|---|---|---|
| Ratio C16:0/C18:0-C24:0 ¹⁾ | 0.1 | 0.1 | 5.4 | 5.4 | 10.4 | 10.4 |
| Ratio SSU/SUS ¹⁾ | 2.0 | 2.0 | 2.0 | 2.0 | 2.0 | 2.0 |
| Content of S₃ types of TAGs in % ²⁾ | 2.7 | 4.6 | 6.4 | 8.2 | 3.1 | 5.0 |
| Total content of SAFA in % ²⁾ | 40.2 | 41.4 | 39.9 | 41.1 | 40.3 | 41.5 |
| Texture after one week at 20 °C in gram ³⁾ | 397 | 470 | 180 | 251 | 86 | 153 |
| Texture index after one week at 20 °C pr. % SAFA | 9.9 | 11.4 | 4.5 | 6.1 | 2.1 | 3.7 |

| | | | | | | |
|---|---|---|---|---|---|---|
| 1) Based on the fat component of the fat composition without S₃ - types of TAGs 2) Based on the total fat composition 3) Texture measured in the model filling containing the fat composition in test | | | | | | |

From the results it can be seen that the texture is increased by the addition of S₃-types of TAGs. The increase in texture is relatively higher for products with lower texture providing properties.

### Example 3:

### Test as a coating compound of a product of the invention vs. a reference and a commercial available product

The model coating composition used was the following:
35% by weight of the fat composition to be tested
15% by weight of cocoa powder
44% by weight of sugar
6% by weight of skim milk powder

All the ingredients were mixed and added 0.4% by weight of lecithin in a Hobart N-50 mixer at 50 °C for ten minutes and refined in a Bühler SDY-300 three-roll refiner to a particle size of approximately 20µ, and conched in the Hobart machine for 6 hours. After conching the mass was used as a coating on biscuits, and tested as further described.

The products tested were the following:
Product K is a fat composition of the invention prepared according to example 1. Product L is a reference fat composition prepared like the products of the invention but with a higher ratio of C16:0/C18:0-C24:0 in the fat component. Product M is a commercial available non-temper product with the trade name Akopol NH 60 from AarhusKarlshamn.

The parameters of the products are tabulated in table 3:

**Table 3**

| **Product / Parameter** | **K** | **L Ref. III** | **M** |
|---|---|---|---|
| Ratio C16:0/C18:0-C24:0 ¹⁾ | 0.1 | 11.0 | 5.4 |
| Ratio SSU/SUS ¹⁾ | 2.0 | 2.0 | 0.95 |
| Content of S₃ types of TAGs in % ²⁾ | 4.2 | 5.5 | 13.0 |
| Total content of SAFA in % ²⁾ | 52.0 | 52.0 | 65.0 |

| | | | |
|---|---|---|---|
| 1) Based on the fat component of the fat composition without S₃ - types of TAGs 2) Based on the total fat composition | | | |

### 3.1 Texture of the coating composition

The texture of the coating composition was measured as described in example 2.

**Table 3.1**

| **Product / Parameter** | **K** | **L Ref. III** | **M** |
|---|---|---|---|
| Texture after one week at 20 °C in gram ¹⁾ | 466 | 270 | 364 |
| Texture index after one week at 20 °C pr. % SAFA | 9.0 | 5.2 | 5.6 |

| | | | |
|---|---|---|---|
| 1) Texture measured in the coating composition containing the fat composition in test | | | |

From the results it can be seen that the fat K of the invention provides a much higher texture and texture index than the reference fat and the commercial available fat M, despite the fact that the fat M has a much higher content of saturated fatty acids.

### 3.2 Solidification and gloss test

Biscuits were coated with the three coatings at 45°C in a Nielsen enrobing machine followed by cooling in a three zone cooling tunnel at 15°C, 12°C and 15°C. The time for total solidification and gloss was monitored.

**Table 3.2**

| **Product/Parameter** | **K** | **L Ref. III** | **M** |
|---|---|---|---|
| Cooling time in minutes ¹⁾ | 4.5 | 7.5 | 6.0 |
| Gloss ²⁾ | 9 | 8 | 7 |

| | | | |
|---|---|---|---|
| 1) Visual evaluation for cooling time until ready for packing 2) Visual evaluation of coated biscuits after 30 minutes storage at 20°C. Higher number indicates higher gloss on a scale from 0-10 | | | |

The coating based on fat K has the fastest solidification time and the best gloss.

### 3.3 Aeration test

The three coatings were aerated in a Hobart N-50 mixer. All coatings were heated to 40°C before whipping, and the water jacket of the Hobart N-50 pot was kept at 18°C during the whipping test. Whipping time was 6 minutes and a spatula-type of stirrer was used for whipping.

**Table 3.3**

| **Product/Parameter** | **K** | **L Ref. III** | **M** |
|---|---|---|---|
| Density before whipping in grams/liter | 1150 | 1150 | 1150 |
| Density after whipping in grams/liter | 730 | 870 | 1120 |

From the results it can be seen that a coating based on fat K of the invention showed the best aeration properties of the fats tested.

## Claims

1. A non-temper, texture providing fat composition comprising
• 10-65% by weight of one or more vegetable oils having a slip melting point of no more than 25°C and
• 35-90 % by weight of one or more vegetable fats having a slip melting point of more than 25°C;
wherein in said one or more vegetable fats at least 90% by weight of the constituent fatty acid chains are longer than C12, the ratio C16:0 / C18:0-C24:0 is no more than 4, and the ratio SSU / SUS is at least 1, and
wherein in said composition the content of S₃ - type of triglycerides is at least 0.5% by weight, wherein the groups S designates identical or different saturated fatty adds, and the groups U designates identical or different unsaturated fatty acids.

2. A fat composition according to claim 1, wherein the ratio C16:0 / C18:0-C24:0 in said one or more vegetable fats is no more than 2.

3. A fat composition according to any one of claims 1 or 2, wherein the slip melting point of said one or more vegetable oils is no more than 20°C, and/or the slip melting point of said one or more vegetable fats is more than 30°C.

4. A fat composition according to any one of claims 1-3, wherein the content of S₃ - type of triglycerides Is no more than 12% by weight.

5. A fat composition according to any one of claims 1-4, wherein the total content of saturated fatty acids is no more than 65% by weight.

6. A method for the production of a fat composition according to any one of claims 1-5 comprising the following steps:
1) providing one or more vegetable oils having a slip melting point of no more than 25°C
2) providing one or more vegetable fats having a slip melting point of more than 25°C, wherein at least 90% by weight of the constituent fatty acid chains are longer than C12, the ratio C16:0 / C18:0-C24:0 is no more than 4, and the ratio SSU / SUS is at least 1, and the content of S₃-types of triglycerides is so high that it constitutes at least 0.5% by weight of the final fat composition,
3) mixing 10-65% by weight of component (1) with 35-90% by weight of component (2) at a temperature above the slip melting point of component (2);
4) cooling the mixture to ambient temperature.

7. A method according to claim 6 further comprising packing said mixture in a suitable container.

8. A method according to claims 6 or 7, wherein said component (2), before the mixing in step (3), is randomized by interesterification in the presence of a catalyst, e.g. sodiummethylate.

9. A method according to any one of claims 6-8, where said one or more vegetable oils or said one or more vegetable fats or said mixture of oils and fats are fractionated by solvent or dry fractionation.

10. A method according to any one of claims 6-9, where said one or more vegetable oils or said one or more vegetable fats have not been hydrogenated and/or are refined and deodorized.

11. Use of a fat composition according to any one of claims 1-5 or produced by any one of claims 6-10 for the manufacture of a processed food product for human and/or animal consumption.

12. Use of a fat composition according to any one of claims 1-5 or produced by any one of claims 6-10 as a component of oils and fats which are to be incorporated in food products for humans and other mammals or as an ingredient in confectionery, bakery and dairy fillings in concentrations of 5-60% by weight, e.g. 10-50% by weight, or as an ingredient in coating compounds for confectionery, bakery and dairy products in concentrations of 1-55% by weight, e.g. 10-40% by weight of the coating compound.

13. A product composed of 5-95% by weight of a fat composition according to any one of claims 1-5 or produced by any one of claims 6-10 and 5-95% by weight of other vegetable oils, fats and/or oil soluble food ingredients.

## Patentansprüche

1. Nicht-temperierte, texturgebende Fettzusammensetzung umfassend
• 10-65 Gew.-% von einem oder mehreren pflanzlichen Ölen mit einem Slip-Schmelzpunkt von nicht mehr als 25 °C und
• 35-90 Gew.-% von einem oder mehreren pflanzlichen Fetten mit einem Slip-Schmelzpunkt von mehr als 25 °C;
wobei in dem einen oder mehreren pflanzlichen Fetten mindestens 90 Gew.-% der konstituierenden Fettsäureketten länger als C12 sind, Das Verhältnis C16:0 / C18:0-C24:0 nicht mehr als 4 beträgt, und das Verhältnis SSU / SUS mindestens 1 beträgt, und
wobei in der Zusammensetzung der Gehalt des S₃ -Typs von Triglyceriden mindestens 0,5 Gew.-% beträgt, wobei die Gruppe S gleiche oder verschiedene gesättigte Fettsäuren bezeichnet, und die Gruppe U gleiche oder verschiedene ungesättigte Fettsäuren bezeichnet.

2. Fettzusammensetzung nach Anspruch 1, wobei das Verhältnis C16:0 / C18:0-C24:0 in dem einen oder mehreren pflanzlichen Fetten nicht mehr als 2 beträgt.

3. Fettzusammensetzung nach einem der Ansprüche 1 oder 2, wobei der Slip-Schmelzpunkt des einen oder mehrerer pflanzlicher Öle nicht mehr als 20 °C beträgt, und/oder der Slip-Schmelzpunkt des einen oder mehrerer pflanzlicher Fette mehr als 30 °C beträgt.

4. Fettzusammensetzung nach einem der Ansprüche 1 bis 3, wobei der Gehalt des S₃-Typs von Triglyceriden nicht mehr als 12 Gew.-% beträgt.

5. Fettzusammensetzung nach einem der Ansprüche 1 bis 4, wobei der Gesamtgehalt an gesättigten Fettsäuren nicht mehr als 65 Gew.-% beträgt.

6. Verfahren zur Herstellung einer Fettzusammensetzung nach einem der Ansprüche 1 bis 5, umfassend die folgenden Schritte:
1) Bereitstellen eines oder mehrerer pflanzlicher Öle mit einem Slip-Schmelzpunkt von nicht mehr als 25 °C,
2) Bereitstellen eines oder mehrerer pflanzlicher Fette mit einem Slip-Schmelzpunkt von mehr als 25 °C, wobei mindestens 90 Gew.-% der konstituierenden Fettsäureketten länger als C12 sind, das Verhältnis C16:0 / C18:0-C24:0 nicht mehr als 4 beträgt, und das Verhältnis SSU / SUS mindestens 1 beträgt, und der Gehalt an S₃-Typen von Triglyceriden so hoch ist, dass er mindestens 0,5 Gew.-% der endgültigen Fettzusammensetzung ausmacht,
3) Mischen von 10-65 Gew.-% der Komponente (1) mit 35-90 Gew.-% der Komponente (2) bei einer Temperatur oberhalb des Slip-Schmelzpunkts der Komponente (2);
4) Kühlen des Gemisches auf eine Umgebungstemperatur.

7. Verfahren nach Anspruch 6, zusätzlich umfassend Verpackung des Gemisches in einem geeigneten Behälter.

8. Verfahren nach Anspruch 6 oder 7, wobei die Komponente (2) vor dem Mischen im Schritt (3) in Gegenwart eines Katalysators, z.B. Natriummethylat, durch Umesterung randomisiert wird.

9. Verfahren nach einem der Ansprüche 6 bis 8, wobei das eine oder mehrere pflanzliche Öle oder das eine oder mehrere pflanzliche Fette oder das Gemisch von Ölen und Fetten durch ein Lösungsmittel oder trockene Fraktionierung fraktioniert werden bzw. wird.

10. Verfahren nach einem der Ansprüche 6 bis 9, wobei das eine oder mehrere pflanzliche Öle oder das eine oder mehrere pflanzliche Fette nicht hydriert worden sind und/oder raffiniert und desodoriert werden.

11. Verwendung einer Fettzusammensetzung nach einem der Ansprüche 1 bis 5 oder erzeugt nach einem der Ansprüche 6 bis 10 zur Herstellung eines verarbeiteten Lebensmittelprodukts für Nahrungs- und/oder Futtermittelanwendungen.

12. Verwendung einer Fettzusammensetzung nach einem der Ansprüche 1 bis 5 oder erzeugt nach einem der Ansprüche 6 bis 10 als einer Komponente von in Lebensmittelprodukte für Menschen und andere Säuger einzuarbeitenden Ölen und Fetten oder als einer Zutat in Süßwaren, Backwaren sowie Milchfüllungen in Konzentrationen von 5-60 Gew.-%, z.B. 10-50 Gew.-%, oder als einer Zutat in Beschichtungsverbindungen für Süßwaren, Backwaren und Milchprodukte in Konzentrationen von 1-55 Gew.-%, z.B. 10-40 Gew.-% der Beschichtungsverbindung.

13. Produkt, bestehend aus 5-95 Gew.-% einer Fettzusammensetzung nach einem der Ansprüche 1 bis 5 oder erzeugt nach einem der Ansprüche 6 bis 10 und 5-95 Gew.-% von anderen pflanzlichen Ölen, Fetten und/oder öllöslichen Lebensmittelzutaten.

## Revendications

1. Composition de graisse texturante, non trempée, comprenant
• 10-65% en poids d'une ou plusieurs huiles végétales ayant un point de fusion au glissement n'excédant pas 25°C et
• 35-90% en poids d'une ou plusieurs graisses végétales ayant un point de fusion au glissement n'excédant pas 25°C;
dans laquelle, dans ladite une ou plusieurs graisses végétales, au moins 90% en poids des chaînes d'acides gras constituantes sont plus longues que C12, le rapport C16:0 / C18:0-C24:0 n'excède pas 4, et le rapport SSU / SUS est au moins 1, et
dans laquelle, dans ladite composition, la teneur en triglycérides du type S₃ est au moins 0,5% en poids, dans laquelle le groupe S désigne les acides gras saturés identiques ou différents, et le groupe U désigne des acides gras insaturés identiques ou différents.

2. Composition de graisse selon la revendication 1, dans laquelle le rapport C16:0 / C18:0-C24:0 dans ladite une ou plusieurs graisses végétales n'excède pas 2.

3. Composition de graisse selon l'une quelconque des revendications 1 ou 2, dans laquelle le point de fusion au glissement de ladite une ou plusieurs huiles végétales n'excède pas 20°C, et/ou le point de fusion au glissement de ladite une ou plusieurs graisses végétales est supérieur à 30°C.

4. Composition de graisse selon l'une quelconque des revendications 1 à 3, dans laquelle la teneur en triglycérides du type de S₃ n'excède pas 12% en poids.

5. Composition de graisse selon l'une quelconque des revendications 1 à 4, dans laquelle la teneur totale en acides gras insaturés n'excède pas 65% en poids.

6. Procédé pour la production d'une composition de graisse selon l'une quelconque des revendications 1 à 5, comprenant les étapes consistant à:
1) fournir une ou plusieurs huiles végétales ayant un point de fusion au glissement n'excédant pas 25°C,
2) fournir une ou plusieurs graisses végétales ayant un point de fusion au glissement n'excédant pas 25°C, au moins 90% en poids des chaînes d'acides gras constituantes étant plus longues que C12, le rapport C16:0 / C18:0-C24:0 n'excédant pas 4, et le rapport SSU / SUS est au moins 1, et la teneur en triglycérides du type S₃ étant si élevée qu'elle constitue au moins 0,5% en poids de la composition de graisse finale,
3) mélanger 10-65% en poids du composant (1) avec 35 à 90% en poids du composant (2) à une température supérieure au point de fusion au glissement du composant (2);
4) refroidir le mélange à la température ambiante.

7. Procédé selon la revendication 6, comprenant en outre l'emballage dudit mélange dans un récipient approprié.

8. Procédé selon les revendications 6 ou 7, dans lequel ledit composant (2), avant le mélange à l'étape (3), est rendu aléatoire par interestérification en présence d'un catalyseur, par exemple le méthylate de sodium.

9. Procédé selon l'une quelconque des revendications 6 à 8, dans lequel ladite une ou plusieurs huiles végétales ou ladite une ou plusieurs graisses végétales ou ledit mélange d'huiles et de graisses sont fractionnés par un solvant ou un fractionnement à sec.

10. Procédé selon l'une quelconque des revendications 6 à 9, dans lequel ladite une ou plusieurs huiles végétales ou ladite une ou plusieurs graisses végétales n'ont pas été hydrogénées et/ou sont raffinées et désodorisées.

11. Utilisation d'une composition de graisse selon l'une quelconque des revendications 1 à 5 ou produite par l'une quelconque des revendications 6 à 10 pour la fabrication d'un produit alimentaire transformé à l'alimentation humaine et/ou animale.

12. Utilisation d'une composition de graisse selon l'une quelconque des revendications 1 à 5 ou produite par l'une quelconque des revendications 6 à 10 en tant que composant d'huiles et de graisses qui doivent être incorporées dans des produits alimentaires pour les humains et d'autres mammifères ou en tant qu'ingrédient dans la confiserie, la boulangerie et les produits laitiers à des concentrations de 5 à 60% en poids, par exemple 10 à 50% en poids, en tant qu'ingrédient dans les produits de revêtement pour la confiserie, la boulangerie et les produits laitiers à des concentrations de 1 à 55% en poids, par exemple 10 à 40% en poids du composé de revêtement.

13. Produit constitué de 5 à 95% en poids d'une composition de graisse selon l'une quelconque des revendications 1 à 5 ou produit par l'une quelconque des revendications 6 à 10 et 5 à 95% en poids d'autres huiles et graisses végétales et/ou ingrédients alimentaires solubles.
